Europäisches Patentamt

European Patent Office

Office européen des brevets

(19)

(11) **EP 1 283 605 A1**

(12) # DEMANDE DE BREVET EUROPEEN

(43) Date de publication:
**12.02.2003 Bulletin 2003/07**

(51) Int Cl.⁷: **H04B 7/08**

(21) Numéro de dépôt: **02292017.7**

(22) Date de dépôt: **09.08.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **10.08.2001 FR 0110740**

(71) Demandeur: **Thales
75008 Paris (FR)**

(72) Inventeurs:
• **Chenu-Tournier, Marc,
Thales Intellectual Property
94117 Arcueil Cedex (FR)**
• **Morgand, Philippe, Thales Intellectual Property
94117 Arcueil Cedex (FR)**

(74) Mandataire: **Dudouit, Isabelle
Thales Intelectual Property
13, avenue Président Salvador Allende
94117 Arcueil Cedex (FR)**

(54) **Procédé pour augmenter le débit dans un système de communication comportant N émetteurs et M récepteurs**

(57) Procédé et dispositif pour augmenter le débit dans un système de communication comportant N émetteurs ($2_N$) et M récepteurs ($3_M$), avec M supérieur ou égal à N. Le procédé comporte les étapes suivantes:

a) émettre simultanément sur plusieurs des N émetteurs ($2_N$) des messages différents,
b) recevoir simultanément sur plusieurs des M récepteurs ($3_M$) ou capteurs de réception la superposition des messages émis lors de l'étape a),

c) estimer les caractéristiques du canal de transmission relatif à chaque couple capteur d'émission capteur de réception,
d) estimer conjointement l'ensemble ou la majorité au moins des messages reçus en tenant compte des signaux ainsi que des caractéristiques ou des canaux de transmission.

Application à des signaux GSM et à des systèmes de transmission monopoint-monopoint, multipoint-monopoint, ou multipoint-multipoint.

CANAUX MULTI-TRAJETS

FIG.1

EP 1 283 605 A1

## Description

La présente invention concerne plus généralement le domaine des systèmes de communication et plus particulièrement les communications sans fil, par exemple les réseaux cellulaires.

Elle s'applique dans tout système de communication où la structure des données transmises ne comporte pas de système intrinsèque permettant de différencier les différents utilisateurs, si ces derniers transmettent simultanément (par exemple les codes du CDMA permettent d'identifier les différents émetteurs).

Le système selon l'invention s'applique plus particulièrement à des communications dédiées point-à-point ou multipoint à point (un point correspondant à un récepteur ou à un émetteur avec une ou plusieurs antennes).

La plupart des systèmes de communication actuels font, en général, appel à une antenne d'émission unique. De ce fait, la capacité du canal de transmission ou le débit maximal des données transmises pouvant être atteint est assez bas.

Il est aussi connu d'utiliser des codes d'étalement, tels que le CDMA (Code Division Multiple Access) pour exploiter de la diversité (de canal) dans un système de communication tel que l'UMTS (Universal Mobile telecommunication System).

Le brevet US 6,115,427 divulgue un procédé et un système permettant d'augmenter le débit des données dans un système de transmission et permettant de fournir une diversité d'antennes en utilisant des antennes de transmission et de réception multiples. Ce procédé s'appuie principalement sur une étape de codage spatio-temporel des données à l'émission afin de différencier les différents flux de donnés et les détecter conjointement.

L'inconvénient de ces procédés est, notamment, que leur mise en oeuvre entraîne la modification des systèmes de transmission ou de communication, par exemple les émetteurs ou les récepteurs existant. De plus, ils ne permettent pas d'effecturs des liaisons multi-point à point.

L'objet de la présente invention repose sur une nouvelle approche qui s'appuie sur un traitement conjoint de tous les signaux, en considérant que tous les signaux émis sont utiles, plutôt que de chercher à en estimer un en considérant les autres comme du bruit, par exemple. Son application peut être faite dans le cas des liaisons point à point et multi-point à point.

Le procédé utilise notamment la diversité apportée par le canal de transmission, echantillonné spatialement par un nombre de capteurs de réception supérieur ou égal au nombre de capteurs d'émission et un processeur ou calculateur adapté.

En fonctionnement normal, le procédé ne fait pas appel à un code d'étalement associé à un utilisateur comme il est connu dans la plupart des dispositifs de l'art antérieur. Il s'applique dans la cas des transmissions multipoint à point et point à point indifféremment.

L'objet de l'invention concerne un procédé pour augmenter le débit dans un système de communication comportant N émetteurs et M récepteurs ou capteurs de réception, avec M supérieur ou égal à N, la structure des données transmises ne présentant pas de système intrinsèque permettant de différencier les utilisateurs. Il est caractérisé en ce qu'il comporte au moins les étapes suivantes :

a) émettre simultanément sur plusieurs des N émetteurs des messages différents,
b) recevoir simultanément sur plusieurs des M capteurs de réception la superposition des messages émis lors de l'étape a), avec M supérieur ou égal à N,
c) estimer les caractéristiques du canal de transmission relatif à chaque couple capteur d'émission, capteur de réception,
d) estimer conjointement l'ensemble ou la majorité au moins des messages reçus en tenant compte des signaux ainsi que des caractéristiques du ou des canaux de transmission.

L'étape d) est par exemple réalisée avec un récepteur adapté à estimer conjointement les séquences de référence transmises dans le signal et les canaux de propagation.

Le procédé utilise par exemple pour l'étape d) un filtre linéaire minimisant l'erreur quadratique moyenne entre la sortie du récepteur et les symboles réels du signal reçu sur les capteurs de réception ou encore un filtre non linéaire minimisant l'erreur quadratique moyenne en tenant compte d'une fonction de filtrage « Feed Forward » et d'une fonction « Feedback » et du vecteur de symboles $b_n$ du signal reçu.

Le procédé s'applique pour des signaux GSM comportant une séquence de référence utilisé pour l'étape b).

Le procédé est utilisé par exemple pour un même utilisateur transmettant simultanément plusieurs messages différents ou pour plusieurs utilisateurs transmettant chacun son propre message.

L'objet de l'invention concerne aussi un système pour augmenter le débit dans un système de transmission comportant plusieurs émetteurs N et plusieurs récepteurs M caractérisé en ce qu'il comporte un dispositif adapté à exécuter les étapes du procédé décrit précédemment.

L'objet de l'invention présente notamment les avantages suivants :

- Offrir un système de transmission assurant une augmentation de débit et de robustesse des transmissions de type cellulaires, par exemple, décrit par le standard ETSI pour le système de communication GSM.
- Elle ne requiert pas, en fonctionnement normal, de codage spatio-temporel.
- Avec peu de modifications des standards existants, elle permet :

    o de multiplier par N le débit d'une transmission de type BTS ou node,
    o de multiplier par N le débit d'un système de réception de type radiomobile cellulaire,
    o d'accroître la robustesse aux phénomènes perturbateurs générés par le canal de transmission.

- Elle s'applique dans des canaux de transmission de types confinés tels que tunnels de train ou Métro et quelque soit le type de medium de transmission et peut être aussi utilisée en milieu urbain, montagne, campagne où la diversité spatiale est suffisante pour assurer une bonne qualité de la transmission.

D'autres caractéristiques et avantages apparaîtront à la lecture de la description qui suit, donnée à titre illustratif et nullement limitatif et des dessins qui représentent :

- La figure 1 une architecture d'un système de transmission selon l'invention,
- Les figures 2A et 2B la disposition d'antennes colocalisées et délocalisées,
- La figure 3 une représentation des fonctions permettant de linéariser la modulation GMSK,
- La figure 4 plusieurs courbes comparatives mettant en oeuvre l'approximation linéaire et une démodulation classique,
- La figure 5 la structure d'un égaliseur DFE classique,
- La figure 6 deux contextes d'application du procédé selon l'invention,
- Les figures 7 à 10 des résultats obtenus en mettant en oeuvre le procédé selon l'invention.

Afin de mieux faire comprendre le procédé et le système de transmission selon l'invention, la description qui suit, est donnée à titre illustratif et nullement limitatif pour un système de transmission de type cellulaire, tel que le GSM, dans un contexte multi-utilisateurs. La structure des données transmises présente comme caractéristique de ne pas comporter de système intrinsèque permettant de différencier les utilisateurs, au moins en fonctionnement normal.

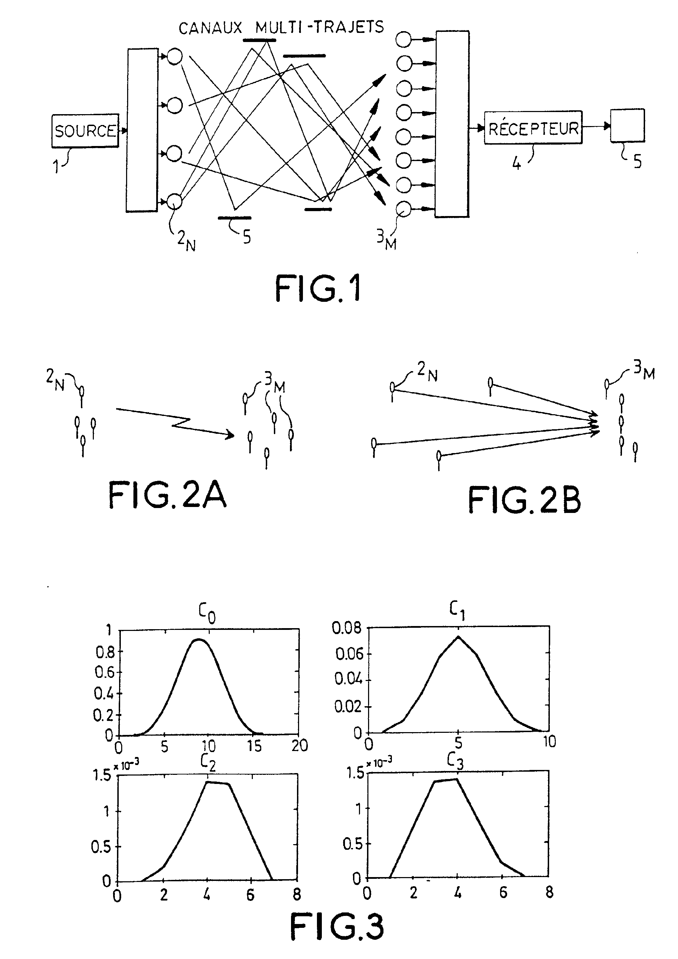

La figure 1 représente un synoptique d'un système de communication de type GSM comportant une source émettrice 1 comportant N antennes d'émission $2_N$ et M antennes de réception $3_M$ reliées à un récepteur 4 et à un dispositif tel qu'un processeur 5 pourvu d'un algorithme adapté à exécuter les étapes du procédé selon l'invention. Le nombre M d'antennes à la réception est supérieur ou égal au nombre N d'antennes à l'émission. Si N utilisateurs sont présents, ils forment le réseau des N antennes d'émission.

L'objet de la présente invention repose notamment sur le fait que les réseaux des M antennes de réception et des N antennes d'émission associés aux caractéristiques du canal de transmission permettent notamment d'exploiter la diversité nécessaire à l'implémentation d'algorithmes de type MIMO (Multiple Input Multiple Output) basés sur la décorrélation des différents canaux pour la détection des flux de données transmis.

Les N antennes d'émission $2_N$ transmettent de préférence simultanément plusieurs flux de données correspondant à différents messages. Les signaux se propagent entre la source et le récepteur en suivant différents trajets, trajets directs ou multi-trajets résultant des réflexions sur des obstacles 5.

Deux exemples de disposition des antennes à l'émission et à la réception sont représentés aux figures 2A et 2B.

Selon une variante de réalisation (figure 2A), un même utilisateur peut transmettre simultanément plusieurs messages différents, ce qui correspond à des antennes d'émission $2_N$ proches les unes des autres. Dans ce cas, les antennes d'émission $2_N$ et de réception $3_M$ sont espacées d'une distante suffisante par rapport à la distance de décorrélation spatiale, générant ainsi des canaux de propagation décorrélés.

Selon une autre variante de réalisation (figure 2B), chacun des N utilisateurs, par exemple, transmet son propre message ce qui correspond à une disposition d'antennes délocalisées. Les capteurs de réception $3_M$ sont suffisamment séparés pour garantir une décorrélation entre les différents canaux de propagation.

L'idée de l'invention consiste notamment à traiter conjointement tous les signaux émis en les considérant comme des signaux utiles plutôt que de chercher à en estimer un, tout en considérant les autres comme du bruit.

Le processeur 5 en liaison avec les antennes de réception $3_M$ est pourvu par exemple d'un algorithme permettant la réception sur une antenne de capteurs co-localisés de multiples messages en provenance d'antennes d'émission délocalisées ou co-localisées et au travers d'un canal de propagation de type urbain, montagneux ou tunnel par exemple.

Différents exemples de récepteur sont donnés dans la suite de la description.

En résumé, le procédé selon l'invention comporte notamment les étapes suivantes :

a) Transmettre simultanément sur les N antennes d'émission $2_N$ différents messages,
b) Recevoir simultanément sur M antennes de réception $3_M$ les différents messages superposés,
c) Estimer les caractéristiques du canal de transmission relatif à chaque antenne de réception,
d) Estimer conjointement l'ensemble des messages reçus en prenant en compte les informations des capteurs (signaux reçus sur les capteurs) ainsi que les caractéristiques du canal précité.

Dans les conditions de fonctionnement normal, le procédé n'utilise pas de système intrinsèque permettant de différencier les utilisateurs, comme par exemple les codes au niveau du CDMA.

Dans les conditions de fonctionnement normal, le procédé ne requiert pas de codage spatio-temporel à l'émission.

L'estimation des caractéristiques d'un canal peut être réalisée selon une méthode connue de l'Homme du métier. Par exemple, l'estimation est réalisée en utilisant des séquences de référence incluses dans le signal, telle que la « training séquence » du GSM.

Les transmissions peuvent être des communications point-à-point, point-à-multipoint ou encore multipoint-à-multipoint.

Avant de détailler les différentes possibilités de traitement à la réception correspondant à l'étape d) du procédé, la description rappelle quelques éléments concernant les signaux.

**Modèle du signal**

Le signal reçu par le réseau de capteurs s'exprime dans le cas d'une émission unique par la relation (1)

$$x(t) = h(t,\tau)^* \, s(t) + n(t) \tag{1}$$

où

- $\mathbf{x}(t)$ est le signal reçu,
- $\mathbf{h}(t,\tau)$ est le vecteur du canal de transmission de dimension M avec t le temps, $\tau$ l'étalement temporel,
- $\mathbf{s}(t)$ est le signal GMSK émis, (Gaussian Minimum Shift Keying), qui ne comporte pas d'identifiant propre à un utilisateur,
- $\mathbf{n}(t)$ est le vecteur bruit de dimension N supposé Gaussien spatialement et temporellement, blanc, de covariance $\sigma^2 I$.

Dans le cas d'un contexte multi-émissions pour lequel les types de propagation engendrent une diversité de transmission et engendrent à ce titre, sur une antenne de plusieurs capteurs spatialement espacés des canaux de propagation décorrélés, le signal reçu est modélisé par l'expression (2) :

$$\mathbf{x}(t) = \sum_{u=1}^{U} \sum_{p=1}^{P} \alpha_p^u(t) s^u(t - \tau_p^u(t)) + \mathbf{n}(t)$$

avec :

- $\mathbf{s}^u(t)$ le signal transmis par l'utilisateur,
- $\alpha_p^u(t)$ le vecteur de dimension N regroupant les amplitudes complexes du trajet **P** pour le signal **u** transmis,
- $\tau_p^u$ le retard de propagation du trajet **P** pour le signal émis **U,**
- **P** est le nombre de trajets de propagation, supposé égal pour chaque émetteur,
- **U** est le nombre de transmissions simultanées.

Dans la suite des développements liés à un contexte non limitatif du GSM, les amplitudes complexes et les retards de propagation seront considérés comme invariants sur un temps équivalent à un burst GSM soit 0.5 ms. Ceci est un exemple donné à titre illustratif et nullement limitatif pour simplifier les notations.

## Linéarisation de la modulation dans l'exemple donné pour le GSM

Dans le cas de l'application non limitative au système GSM, la modulation employée en transmission est de type GMSK (Gaussian Minimum Shift Keying). Cette dernière est une modulation à mémoire dépendante de trois symboles à chaque instant t. Le démodulateur optimal en BBGN (Bruit Blanc Gaussien Normal) est par exemple implémenté par un décodeur de Viterbi connu de l'Homme du métier. Du fait du nombre d'états de phase possibles $(0, \pi/2, \pi, 3\pi/2)$ et du nombre de symboles de mémoire (trois), le décodeur comporte 16 états $(3-1)^4$ à examiner pour chaque bit reçu.

Afin de simplifier le problème induit par la mémoire de symboles et lié à la modulation GMSK, une simplification est réalisée à l'aide d'une représentation équivalente utilisant une combinaison de modulations linéaires, décrite par exemple dans l'article de P.A. Laurent, ayant pour titre "Exact and approximate construction of digital phase modulations by superposition of Amplitude Modulated Pulses (AMP)" et publié IEEE Trans. Communications, vol. 34, pp.150-160, 1986.
Cette combinaison linéaire s'exprime sous la forme (3) :

$$s(t) = \sum_{n=-\infty}^{\infty} j^{A_{0,n}} \left[ C_0(t - nT_s) + j^{-a_{n-1}} C_1(t - nT_s) + j^{a_{n-2}} C_2(t - nT_s) + j^{a_{n-1}-a_{n-2}} C_3(t - nT_s) \right]$$

avec

$$A_{0,n} = \Sigma_{i=-\infty}^{n} a_i$$

Les fonctions $C_0(t),....,C_3(t)$ représentées sur la figure 3 sont obtenues à partir de la décomposition précitée.
Compte tenu de la faible contribution des coefficients $C_0(t),....,C_3(t)$, la modulation GMSK s'exprime selon la relation (4) :

$$s(t) = \sum_{n=0}^{\infty} j^{A_{0,n}} C_0(t - nT_s)$$

la fonction $C_0(t)$ étant définie sur 4 symboles.
Dans ce cas, la démodulation en BBGN ((Bruit Blanc Gaussien Normal) respectant le critère de Nyquist est réalisée par exemple au travers d'un simple Filtre Adapté (FA), suivi d'un échantillonneur au rythme symbole et d'une prise de décision.

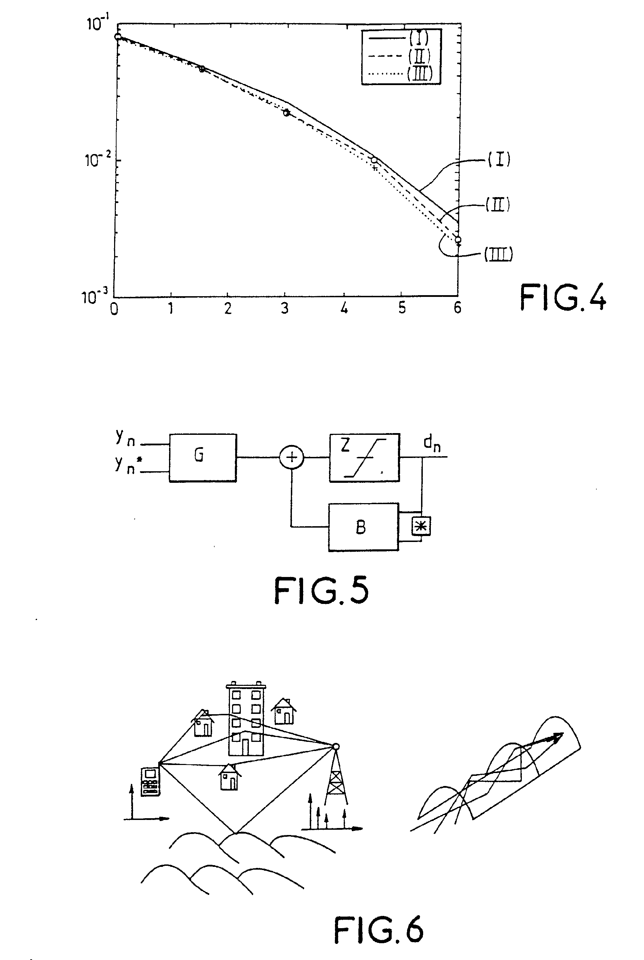

La figure 4 illustre la faible distorsion introduite par la méthode d'approximation linéaire vis à vis d'une démodulation classique GMSK à l'aide du décodeur de Viterbi. Les courbes (I), (II), (III) correspondent respectivement à la méthode d'approximation linéaire, la courbe théorique et à une démodulation optimale de type Viterbi. L'axe des abscisses correspond au rapport $E_b/N_0$ avec $E_b$ l'énergie binaire et $N_0$ la densité spectrale de puissance du bruit.

## Modèle du signal en transmissions Multi-utilisateurs

Dans le contexte multi-utilisateurs, le canal de propagation ou de transmission est modélisé comme étant spéculaire. Cette représentation est donnée à titre illustratif et nullement limitatif, toute autre modélisation adaptée pouvant être utilisée.
Le modèle du signal dans cet exemple est modifié afin de prendre en compte ces nouvelles hypothèses selon la relation (5) suivante :

$$\mathbf{x}(t) = \sum_{u=1}^{U} \sum_{p=1}^{P} \alpha_p^u s^u(t - \tau_p^u) + \mathbf{n}(t)$$

Après approximation linéaire le signal reçu par les capteurs s'écrit (6):

$$\mathbf{x}(t) = \sum_{u=1}^{U} \sum_{p=1}^{P} \sum_{n=1}^{N_a} \alpha_p^u \cdot j^n \cdot b_n^u \cdot C_0(t - nT_s - \tau_p^u) + \mathbf{n}(t)$$

où $N_a$ est le nombre de symboles envoyés.

Après un suréchantillonnage à la fréquence Fe = $1/T_e$ avec $T_e = T_{symbole}/K$ (K facteur de sur-échantillonnage) le signal reçu devient (7) :

$$\mathbf{x}(nT_e) = \sum_{u=1}^{U} \sum_{p=1}^{P} \alpha_p^u \sum_{n=1}^{N_a} j^n \cdot b_n^u \cdot C_0(nT_e - nT_s - \tau_p^u) + \mathbf{n}(nT_e)$$

avec $\mathbf{x}(nT_e)$ de dimensions $N*N_e$,
$N$ est le nombre de capteurs et $N_e$ le nombre d'échantillons sur la tranche temporelle $nT_e$ tel que (8):

$$x = [x^T(0), \cdots x^T((N_e-1)T_e)]^T$$

où $N_e$ est choisi égal à :

$$N_a(4 \cdot k + L - 1)$$

avec $L$ est la longueur du canal vérifiant (9)

$$0 \leq \tau_p^u \leq (L - 1)T_e, \ \forall u,p$$

Le nombre 4 est lié à la durée temporelle en symbole de la fonction $C_0(t)$.
La formulation matricielle du signal $x$ conduit à (10) :

$$x = Ha + n$$

où le vecteur $a$ de dimension $N_a * U$ s'écrit :

$$a = [a_1^T, \cdots, a_{N_a}^T]^T$$

avec :

$$a_n = j^n \cdot [b_n^1, \cdots, b_n^U]^T$$

La matrice $H$ ($N.N_e * N_a$) représente la convolution de la réponse impulsionnelle du canal sur échantillonné par la

fonction $C_0(t)$

$$\hat{H} = [C^I \cdots C^U] \qquad (11)$$

ou :

$$\mathbf{C}^u = \sum_{p=1}^{P} \begin{bmatrix} \mathbf{0}_{\tau_p^u} \\ \mathbf{c}_{\tau_p^u} \\ \mathbf{0}_{\gamma_p^u} \end{bmatrix}$$

avec :

$$c_{\tau_p^u} = [C_0(lT_e - \tau_p^u), \cdots, C_0((l + 4 \cdot k)T_e - \tau_p^u)]^T \otimes \alpha_p^u$$

$$l = \underset{l}{argmin} \left\lfloor \frac{\tau_p^u}{lT_r} \right\rfloor$$

$\otimes$ est le produit de Kronecker
Ce modèle est employé dans la suite du procédé selon l'invention.

**Explication détaillée de l'étape d) de traitement à la réception**

Le procédé et le système selon l'invention utilisent un algorithme permettant de recevoir plusieurs signaux sur une antenne de capteurs co-localisés de multiples messages en provenance d'antennes d'émission délocalisées ou co-localisées et au travers d'un canal de propagation de type urbain, montagneux ou tunnel, par exemple.
La description qui suit donne trois exemples de récepteurs permettant d'exécuter notamment l'étape d).

**Récepteurs optimaux**

Un récepteur optimal estime conjointement les séquences transmises et les canaux de propagations. Ces récepteurs présentent néanmoins l'inconvénient d'être rapidement complexes.
Différents types d'égaliseurs peuvent être retenus tels que le FA (Filtre Adapté), DFE ZF (Decision Feed back Equalizer-Zero Forcing), DFE MMSE (Decision Feed back - Minimum Mean Square Error).
Les résultats obtenus sur simulations ont montré que seuls les récepteurs sous optimaux MMSE linéaires ainsi que les égaliseurs de type non linéaire DFE-MMSE sont les plus performants en terme de TEB résiduel (Taux d'erreur bits).

**Récepteurs MMSE sous optimaux linéaires**

Après avoir appliqué aux signaux reçus x, le filtre adapté H qui peut être blanchissant ou non on obtient :

$$y = H^H x \qquad (12)$$

Dans l'application au contexte GSM, le détecteur MMSE est un filtre appliqué en sortie du FA minimisant l'erreur quadratique moyenne entre la sortie du récepteur et les symboles réels tel que (13):

$$E\left[\left\|\mathbf{M}_{MMSE}\cdot\left[\begin{array}{c}\mathbf{y}\\\mathbf{y}^*\end{array}\right]-\mathbf{a}\right\|^2\right]$$

a est défini par $e_i = [0,0,...0,1,0,.....,0]$ avec le 1 en position i
l'étape de minimisation conduit à l'expression (14):

$$E\left[\mathbf{e}_j^T\cdot\left[\begin{array}{c}\mathbf{y}\\\mathbf{y}^*\end{array}\right]\cdot\left[\begin{array}{cc}\mathbf{y}^\dagger&\mathbf{y}^T\end{array}\right]\cdot\mathbf{M}_{MMSE}^\dagger\mathbf{e}_i\right]=E\left[\mathbf{e}_j^T\cdot\left[\begin{array}{c}\mathbf{y}\\\mathbf{y}^*\end{array}\right]\cdot\mathbf{a}^\dagger\cdot\mathbf{e}_i\right]$$

avec :

$$E\left[\mathbf{y}\mathbf{y}^\dagger\right]=\bar{\mathbf{H}}\bar{\mathbf{H}}^\dagger+\sigma^2\bar{\mathbf{H}}$$

$$E\left[\mathbf{y}\mathbf{y}^T\right]=\bar{\mathbf{H}}\tilde{\mathbf{I}}\bar{\mathbf{H}}^T$$

le critère devient :

$$\left[\left[\begin{array}{cc}\bar{\mathbf{H}}\bar{\mathbf{H}}^\dagger&\bar{\mathbf{H}}\tilde{\mathbf{I}}\bar{\mathbf{H}}^T\\\bar{\mathbf{H}}^*\tilde{\mathbf{I}}\bar{\mathbf{H}}^\dagger&\bar{\mathbf{H}}^*\bar{\mathbf{H}}^T\end{array}\right]+\sigma^2\left[\begin{array}{cc}\bar{\mathbf{H}}&\mathbf{0}\\\mathbf{0}&\bar{\mathbf{H}}^*\end{array}\right]\right]\cdot\mathbf{M}_{MMSE}^\dagger=\left[\begin{array}{c}\bar{\mathbf{H}}\tilde{\mathbf{I}}\\\bar{\mathbf{H}}^*\tilde{\mathbf{I}}\end{array}\right]$$
(15)

Soit la relation (16) :

$$\mathbf{M}_{MMSE}^\dagger=\left[\begin{array}{cc}\mathbf{H}_n\mathbf{H}_n^\dagger+\sigma^2\mathbf{H}_n&\mathbf{H}_n\tilde{\mathbf{I}}_n\mathbf{H}_n^T\\\mathbf{H}_n^*\tilde{\mathbf{I}}_n\mathbf{H}_n^\dagger&\mathbf{H}_n^*\mathbf{H}_n^T+\sigma^2\mathbf{H}_n\end{array}\right]^{\#}\cdot\left[\begin{array}{c}\mathbf{H}_n\mathbf{I}_7\\\mathbf{H}_n\mathbf{I}_8\end{array}\right]$$

où # correspond à la pseudo-inverse.

Ce récepteur linéaire est optimal, par rapport à son critère, sur les blocs (ou slots) de la transmission GSM et prennent en compte la structure fine des trames FDD/TDMA (abréviation anglo-saxonne de Frequency Division Duplex/Time Division Multiple Access).

**Récepteurs MMSE sous optimaux non linéaires**

Ils présentent comme avantage minimiser la taille des inversions matricielles.

La structure d'un égaliseur DFE classique est définie à la figure 5

La fonction de filtrage G est nommée communément "Feed forward", la fonction B est dénommée " Feedback ".

Deux types d'égaliseurs DFE peuvent être considérés : le ZF (Zéro Forcing) et le MMSE (Minimum Mean Square Error).

Il est rappelé que les égaliseurs de type ZF ne prennent pas en compte la présence du bruit, limitant de ce fait leurs performances obtenues pour des faibles rapports Signal à Bruit.

En conséquence, seul l'égaliseur de type MMSE est décrit dans la méthode suivante.

Le critère d'optimisation minimisant l'erreur quadratique moyenne en sortie de l'égaliseur s'écrit (17) :

$$E\left[\left\|\begin{bmatrix}\mathbf{G} & -\mathbf{B}\end{bmatrix}\begin{bmatrix}\mathbf{y}_n \\ \mathbf{y}_n^* \\ \mathbf{d}_n \\ \mathbf{d}_n^*\end{bmatrix} - b_n\right\|^2\right]$$

où:

$$\mathbf{y}_n = \begin{bmatrix}\overline{\mathbf{y}}_{n-L_G}^T & \cdots & \overline{\mathbf{y}}_n^T & \cdots & \overline{\mathbf{y}}_{n+L_G}^T\end{bmatrix}^T$$

avec :

$$\mathbf{y} = \begin{bmatrix}\overline{\mathbf{y}}_1^T & \cdots & \overline{\mathbf{y}}_{N_a}^T\end{bmatrix}^T$$

et:

$$\mathbf{b}_n = \begin{bmatrix}\mathbf{a}_{n-L_G}^T & \cdots & \mathbf{a}_n^T & \cdots & \mathbf{a}_{n+L_G}^T\end{bmatrix}^T$$

représente un vecteur de symboles et :

$$\mathbf{d}_n = \begin{bmatrix}\mathbf{a}_{n-L_B}^T & \cdots & \mathbf{a}_{n-1}^T\end{bmatrix}^T$$

La matrice $\mathbf{H_n}$ contient la réponse impulsionnelle correspondant à l'observation $\mathbf{y_n}$ :

$$y_n = H_n b_n + n_n$$

avec $\mathbf{n}_n$ le vecteur bruit, corrélé correspondant à l'observation $\mathbf{y}_n$.

Les filtres G et B sont obtenus suivant les relations suivantes (18) :

$$
\begin{bmatrix} \mathbf{G}^{\dagger}_{DFE-MMSE} \\ -\mathbf{B}^{\dagger}_{DFE-MMSE} \end{bmatrix} = \begin{bmatrix} \mathbf{H}_n\mathbf{H}^{\sim}_n + \sigma^2\mathbf{H}_n & \mathbf{H}_n\tilde{\mathbf{I}}_n\mathbf{H}^{T}_n & \mathbf{H}_n\mathbf{I}_3 & \mathbf{H}_n\mathbf{I}_4 \\ \mathbf{H}^{*}_n\tilde{\mathbf{I}}_n\mathbf{H}^{\sim}_n & \mathbf{H}^{*}_n\mathbf{H}^{T}_n + \sigma^2\mathbf{H}_n & \mathbf{H}^{*}_n\mathbf{I}_1 & \mathbf{H}^{*}_n\mathbf{I}_3 \\ \mathbf{I}^{T}_3\mathbf{H}^{\dagger}_n & \mathbf{I}^{H}_4\mathbf{H}^{T}_n & \mathbf{I}_5 & \mathbf{I}_6 \\ \mathbf{I}^{T}_4\mathbf{H}^{\dagger}_n & \mathbf{I}^{H}_3\mathbf{H}^{T}_n & \mathbf{I}_6 & \mathbf{I}_5 \end{bmatrix}^{\#} \cdot \begin{bmatrix} \mathbf{H}_n\mathbf{I}_7 \\ \mathbf{H}_n\mathbf{I}_8 \\ 0 \\ 0 \end{bmatrix}
$$

La longueur du filtre B est égale à LB et celle du filtre G à 2 (2LG+1)
Avec:

$$
\tilde{\mathbf{I}}_n = E\left[\mathbf{b}^{*}_n\mathbf{b}^{\dagger}_n\right]
$$

$$
\mathbf{I}_3 = E\left[\mathbf{b}_n\mathbf{d}^{\dagger}_n\right]
$$

$$
\mathbf{I}_4 = E\left[\mathbf{b}_n\mathbf{d}^{T}_n\right]
$$

$$
\mathbf{I}_5 = E\left[\mathbf{d}_n\mathbf{d}^{\dagger}_n\right]
$$

$$
\mathbf{I}_6 = E\left[\mathbf{d}^{*}_n\mathbf{d}^{\dagger}_n\right]
$$

$$
\mathbf{I}_7 = E\left[\mathbf{b}_n\mathbf{a}^{\dagger}_n\right]
$$

$$
\mathbf{I}_8 = E\left[\mathbf{b}^{*}_n\mathbf{a}^{\dagger}_n\right]
$$

Le procédé décrit précédemment s'applique particulièrement bien dans le cadre d'un milieu urbain ou montagneux, ou encore pour des tunnels de type Métro ou trains schématisés à la figure 6.

Le premier engendre un contexte multi-trajets générateur de somme de plusieurs signaux corrélés et retardés, le deuxième est caractérisé principalement par une atténuation importante dans les premiers décamètres parcourus et une somme de différents trajets induisant au niveau des capteurs de réception une décorrélation spatio temporelle importante. Les deux types de propagations sont générateurs de diversité de transmission et engendrent à ce titre sur une antenne de plusieurs capteurs spatialement espacés des canaux de propagation décorrélés.

La propagation de type urbaine, montagne ou tunnel induit des multi-trajets convergeant vers le récepteur d'intérêt. De ce fait un étalement Doppler est généré en modifiant de façon aléatoire les caractéristiques complexes du signal reçu par chacun des capteurs et créant ainsi de la diversité de propagation.

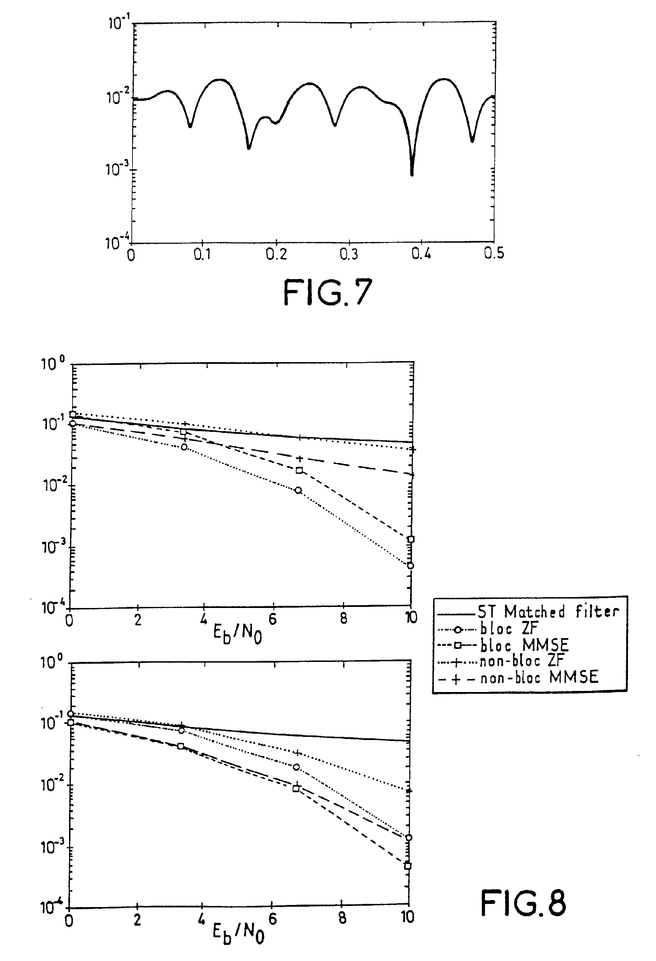

Les figures 7 à 11 représentent des résultats obtenus en mettant en oeuvre le procédé selon l'invention.

Les performances des égaliseurs à bloc et non blocs sont présentées et comparées. Les valeurs des filtres calculés dépendent de la longueur choisie du filtre transverse.

**Modèle du canal de transmission**

La figure 7 représente la réponse en fréquence du canal de transmission.
Les résultats ont été obtenus pour un canal de caractéristiques suivantes :

• 4 trajets dans un canal

$$\tau = [1, 14, 17, 11]$$

• amplitudes complexes des trajets :

$$\alpha = [-0.6632 + 0.0188i, 0.0622 - 0.0549i, -0.3343+0.2573, i0.1366 - 0.6557i]$$

• facteur de sur-échantillonnage symbole : 4

**Résultats obtenus dans le cas de multiple-émission, multiple réception, multi-trajets**

Deux scénarios d'émission sont ici considérés :

1. MIMO transmission point à point
2. MIMO transmission multi - point à point

Dans le premier cas les émetteurs sont séparés d'une distance plus grande que la distance de corrélation du canal considéré. Dans ce cas le profil du canal est le même pour tous les trajets ( DOA et retards induits). Ce cas est classique dans une propagation de type tunnels.

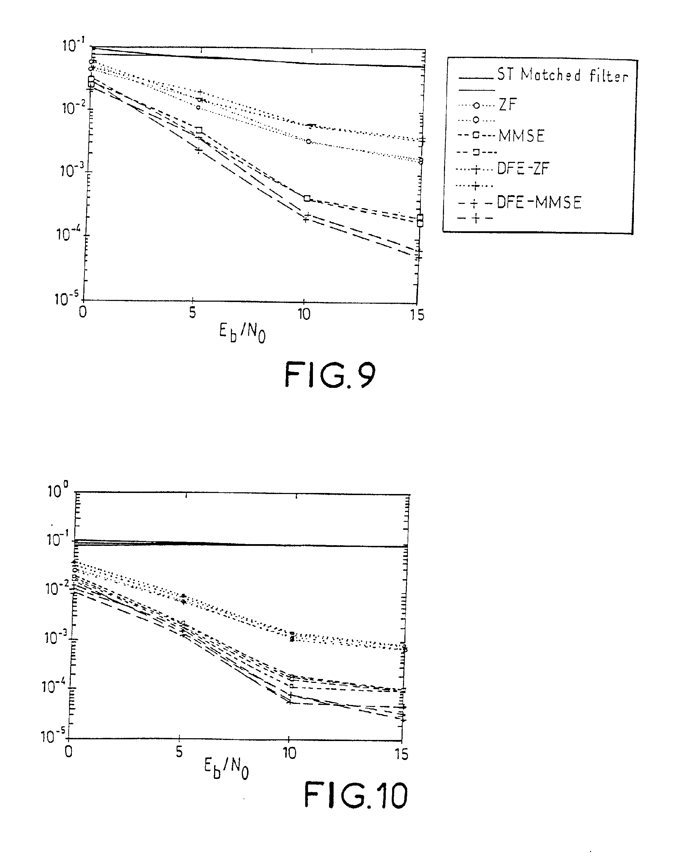

La figure 9 représente la performance obtenue dans le cas de 2 émissions délocalisées, 3 capteurs de réception, 2 trajets par canal et le cas de récepteurs non blocs.
Le système DFE-MMSE (Decision Feed Back Equalizer-Zero Forcing) offre les meilleures performances et n'est pas trop sensible à l'IES (Interférence entre symboles) introduite par le second trajet
Dans le second cas les canaux de propagation sont totalement décorrélés (transmission en extérieur ou 'outdoor' ). Ceci permet notamment de valider la faisabilité de transmission dans un contexte tunnel de métro dans le rapport 4 par rapport à une transmission GSM classique. Les performances obtenues dans ce type de scénario sont représentées à la figure 10 dont les légendes sont identiques à celles de la figure 9 par exemple.
Les conditions sont les suivantes 4 émissions, 5 capteurs de réception, 1 trajet par canal de même retard et un récepteur non bloc.
La figure permet de noter que les performances sont meilleures que dans le cas de la figure 9. Ceci est lié au fait que la capacité du canal de transmission s'accroît lorsque le nombre d'antennes d'émission et de réception augmentent.
Les résultats précédents sont réalisés sans système correcteur d'erreurs et présentent des taux d'erreurs de $10^{-3}$ à $10^{-4}$ pour des rapports signal/bruit, S/B supérieurs à 5 dB.

**Revendications**

**1.** Procédé pour augmenter le débit dans un système de communication comportant N émetteurs ($2_N$) et M récepteurs ($3_M$), avec M supérieur ou égal à N, la structure des données échangées ne comportant pas de système intrinsèque permettant de différencier les utilisateurs **caractérisé en ce qu'**il comporte au moins les étapes suivantes :

a) émettre simultanément sur plusieurs des N émetteurs ($2_N$) des messages différents,
b) recevoir simultanément sur plusieurs des M récepteurs ($3_M$) ou capteurs de réception, la superposition des messages émis lors de l'étape a),
c) estimer les caractéristiques du canal de transmission relatif à chaque couple capteur d'emission capteur de reception,
d) estimer conjointement l'ensemble ou la majorité au moins des messages reçus en tenant compte des signaux ainsi que des caractéristiques du ou des canaux de transmission.

2. Procédé selon la revendication 1 **caractérisé en ce que** l'étape d) est réalisée avec un récepteur adapté à estimer conjointement les séquences de référence transmises dans le signal et les canaux de propagation.

3. Procédé selon la revendication 2 **caractérisé en ce que** l'étape d) utilise un filtre linéaire minimisant l'erreur quadratique moyenne entre la sortie du récepteur et les symboles réels du signal reçu sur les capteurs de réception.

4. Procédé selon la revendication 2 **caractérisé en ce que** l'étape d) utilise un filtre non linéaire minimisant l'erreur quadratique moyenne en tenant comte d'une fonction de filtrage « Feed Forward » et d'une fonction « Feedback » et du vecteur $\mathbf{b}_n$ des symboles du signal reçu.

5. Procédé selon l'une des revendications 1 à 4 **caractérisé en ce que** les signaux sont des signaux GSM comportant une séquence de référence utilisée pour l'étape d).

6. Utilisation du procédé selon l'une des revendications 1 à 5 pour un même utilisateur transmettant simultanément plusieurs messages différents ou pour plusieurs utilisateurs transmettant chacun son propre message.

7. Système pour augmenter le débit dans un système de transmission comportant un nombre N d'émetteurs ($2_N$) et un nombre M de récepteurs ($3_M$) **caractérisé en ce qu'**il comporte au moins un dispositif adapté à exécuter les étapes des revendications 1 à 6.

8. Système selon la revendication 7 **caractérisé en ce que** le nombre M est supérieur ou égal à N.

9. Application du procédé selon l'une des revendications 1 à 6 ou du dispositif selon l'une des revendications 7 à 8 dans des systèmes de transmission monopoint-monopoint, multipoint-monopoint, ou multipoint-multipoint.

CANAUX MULTI-TRAJETS

FIG.1

FIG.2A

FIG.2B

$C_0$

$C_1$

$C_2$

$C_3$

FIG.3

FIG.4

FIG.5

FIG.6

FIG.7

ST Matched filter
bloc ZF
bloc MMSE
non-bloc ZF
non-bloc MMSE

FIG.8

FIG.9

FIG.10

Office européen
des brevets

## RAPPORT DE RECHERCHE EUROPEENNE

Numéro de la demande

EP 02 29 2017

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 899 896 A (SIEMENS AG)<br>3 mars 1999 (1999-03-03)<br>* abrégé *<br>* page 4, ligne 29 - ligne 34; figure 1 *<br>* page 5, ligne 44 - ligne 50; figure 3 *<br>* page 6, ligne 20 - page 8, ligne 14; figure 5 *<br>* revendications 4,7,8 * | 1-3,5-9 | H04B7/08 |
| X<br><br>A | WO 00 74264 A (WATKINS JOHNSON CO)<br>7 décembre 2000 (2000-12-07)<br><br>* abrégé; figure 2A *<br>* page 4, ligne 26 - page 5, ligne 9 *<br>* page 5, ligne 29 - page 6, ligne 8; figures 3,6 *<br>* page 12, ligne 24 - ligne 30 * | 1,2,6-9<br><br>3-5 | |
| X | WO 99 40698 A (MOTOROLA INC)<br>12 août 1999 (1999-08-12)<br>* abrégé *<br>* page 5, ligne 20 - page 6, ligne 11; figure 1 *<br>* page 7, ligne 5 - ligne 11; figures 2,3 *<br>* page 8, ligne 21 - page 10, ligne 13; figure 4 *<br>* revendication 1 * | 1-3,5-9 | **DOMAINES TECHNIQUES RECHERCHES (Int.Cl.7)**<br><br>H04B |
| X | US 5 566 209 A (FORSSEN ULF GOERAN ET AL)<br>15 octobre 1996 (1996-10-15)<br>* colonne 4, ligne 65 - colonne 5, ligne 41; figure 2 * | 1-9 | |

-/--

Le présent rapport a été établi pour toutes les revendications

| Lieu de la recherche | Date d'achèvement de la recherche | Examinateur |
|---|---|---|
| LA HAYE | 29 octobre 2002 | Sieben, S |

EPO FORM 1503 03.82 (P04C02)

Office européen
des brevets

**RAPPORT DE RECHERCHE EUROPEENNE**

Numéro de la demande

EP 02 29 2017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 01 58049 A (HARRIS CORP) 9 août 2001 (2001-08-09) * abrégé * * page 2, ligne 12 - ligne 18 * * revendications 1-6,9,11-14 * | 1-3,5-9 | |
| A | EDWARD A. LEE, DAVID G. MESSERSCHMITT: "Digital Communication" 1990 , KLUWER ACADEMIC PRESS , BOSTON XP002197169 * page 335, ligne 28 - page 339, ligne 11; figures 8-22,8-23,8-24 * | 1,2,4 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 29 octobre 2002 | Sieben, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 02 29 2017

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-10-2002

| Document brevet cité au rapport de recherche | | Date de publication | Membre(s) de la famille de brevet(s) | | Date de publication |
|---|---|---|---|---|---|
| EP 0899896 | A | 03-03-1999 | EP | 0899896 A1 | 03-03-1999 |
| | | | US | 6317612 B1 | 13-11-2001 |
| WO 0074264 | A | 07-12-2000 | US | 6285720 B1 | 04-09-2001 |
| | | | AU | 4697000 A | 18-12-2000 |
| | | | EP | 1188257 A1 | 20-03-2002 |
| | | | WO | 0074264 A1 | 07-12-2000 |
| | | | US | 2002003843 A1 | 10-01-2002 |
| WO 9940698 | A | 12-08-1999 | US | 6339612 B1 | 15-01-2002 |
| | | | BR | 9814805 A | 17-10-2000 |
| | | | EP | 1068688 A1 | 17-01-2001 |
| | | | JP | 2002503057 T | 29-01-2002 |
| | | | WO | 9940698 A1 | 12-08-1999 |
| US 5566209 | A | 15-10-1996 | AU | 694175 B2 | 16-07-1998 |
| | | | AU | 1723795 A | 04-09-1995 |
| | | | CA | 2159712 A1 | 24-08-1995 |
| | | | CN | 1124548 A ,B | 12-06-1996 |
| | | | DE | 69516338 D1 | 25-05-2000 |
| | | | EP | 0693246 A1 | 24-01-1996 |
| | | | FI | 954806 A | 09-10-1995 |
| | | | JP | 8511394 T | 26-11-1996 |
| | | | WO | 9522873 A2 | 24-08-1995 |
| | | | SG | 48507 A1 | 17-04-1998 |
| WO 0158049 | A | 09-08-2001 | AU | 3659301 A | 14-08-2001 |
| | | | WO | 0158049 A2 | 09-08-2001 |

EPO FORM P0460

Pour tout renseignement concernant cette annexe : voir Journal Officiel de l'Office européen des brevets, No.12/82